# EUROPÄISCHE PATENTSCHRIFT

(11) **EP 3 325 285 B1**
(45) Veröffentlichungstag und Bekanntmachung des Hinweises auf die Patenterteilung: **12.06.2019**
(21) Anmeldenummer: 16708150.4
(22) Anmeldetag: 07.03.2016
(51) Int. Cl.: B60C 19/00

(54) **FAHRZEUGLUFTREIFEN**
PNEUMATIC VEHICLE TIRE
PNEUMATIQUE DE VÉHICULE

(30) Priorität: 17.07.2015 DE 102015213496
(43) Veröffentlichungstag der Anmeldung: 30.05.2018
(73) Patentinhaber: Continental Reifen Deutschland GmbH, 30165 Hannover (DE)
(72) Erfinder: SCHÜRMANN, Oliver, 30855 Langenhagen (DE); TYBURSKI, Andreas, 31241 Ilsede (DE); THIEMANN, Annalena, 31319 Sehnde (DE)
(74) Vertreter: Finger, Karsten
(86) Internationale Anmeldenummer: PCT/EP2016/054721
(87) Internationale Veröffentlichungsnummer: WO 2017/012720

(56) Entgegenhaltungen:
- EP-A2- 0 364 927
- JP-A- 2005 104 314
- JP-A- 2008 162 496

## Beschreibung

Die Erfindung betrifft einen Fahrzeugluftreifen nach dem Oberbegriff des Patentanspruches 1.

Fahrzeugluftreifen der hier betroffenen Art können sowohl für Zweiräder, als auch für Personenkraftwagen, landwirtschaftliche Fahrzeuge und/oder Lastkraftwagen zum Einsatz kommen. Die Gemeinsamkeit dieser Fahrzeugluftreifen besteht darin, dass diese eine strukturierte Lauffläche aufweisen, deren Struktur in geeigneter Weise an die zu erwartenden Untergründe und Witterungsverhältnisse angepasst ist. Die Lauffläche des Fahrzeugluftreifens geht in an sich bekannter Weise beidseitig in Seitenwände über, deren Ende jeweils durch einen Reifenwulst gebildet wird. Der Reifenwulst dient der luftdichten Fixierung des aus verschiedenen Gummimischungen zusammengesetzten Teils des Fahrzeugluftreifens an einer Felge eines mit dem Fahrzeugluftreifen ausgestatteten Fahrzeugrades. Die Fahrzeugfelge weist dabei in ebenfalls bekannter Weise korrespondierend zu dem Reifenwulst einen Felgenrand auf, an den sich der Reifenwulst dichtend anlegt, wenn der schlauchlose Fahrzeugluftreifen mit Druckluft befüllt wird. Der Fahrzeugluftreifen weist folglich einen Lufthohlraum auf, in dem eine Schaumstoffschicht aus Polyurethan oder Polyethylen vorhanden ist, die an der der Lauffläche des Fahrzeugluftreifens gegenüberliegenden Innenoberfläche befestigt wird.
Fahrzeugluftreifen müssen heutzutage nicht nur die vom Kraftfahrzeug erzeugte Bewegungsenergie bei wechselnden Umweltbedingungen jederzeit optimal auf den Untergrund übertragen, sondern auch zunehmend gehobenen Komfortansprüchen entsprechen. Hierbei spielt auch das Abrollgeräusch des Fahrzeugluftreifens eine maßgebliche Rolle, das durch die Vibration der Luft entsteht, wenn diese beim Anpressen des Fahrzeugluftreifens gegen den Straßenbelag komprimiert wird. Das Abrollgeräusch wird vom Fahrzeugluftreifen auf die Radnabe übertragen, bevor es eventuell über die Lenkung und die Aufhängung in den Fahrgastraum gelangt. Eine Belastung durch das während des Fahrens entstehende Abrollgeräusch wird jedoch nicht nur innerhalb, sondern auch außerhalb des Kraftfahrzeugs als störend empfunden, was beispielsweise in Städten eine zunehmende Bedeutung gewinnt.
Das Abrollgeräusch kann durch eine bereits bekannte und in einigen Kraftfahrzeugen bereits im Einsatz befindliche Technologie maßgeblich reduziert werden. Dabei kommt ein in dem Fahrzeugluftreifen angeordneter und häufig als "Absorber" bezeichneter Schaumstoff zum Einsatz, der mit einem Kleber an der Innenoberfläche der Lauffläche angebracht wird. Die Struktur dieses Schaumstoffes, der in der Regel aus aufgeschäumtem Polyurethan (PU) oder Polyethylen (PE) besteht, bleibt auch bei extremen Temperaturschwankungen erhalten. Polyurethane sind Kunststoffe oder Kunstharze, die aus der Polyadditionsreaktion von Dialkoholen beziehungsweise Polyolen mit Polyisocyanaten entstehen. In Abhängigkeit von der Art des Kraftfahrzeugs, dessen Geschwindigkeit und der Straßenoberfläche, können durch die genanten Schallreduktionsmaßnahmen derzeit Reduzierungen der Fahrzeuggeräusche im Innenraum des Kraftfahrzeugs um bis zu 9dB(A) erreicht werden, wobei durch die Einbringung des Schaumstoffes in den Fahrzeugluftreifen weder die Fahreigenschaften noch die Laufleistung, die Tragfähigkeit oder die mit dem Fahrzeugluftreifen erzielbare Geschwindigkeit eingeschränkt wird.

Ein derartiger Fahrzeugluftreifen geht beispielhaft aus der DE 10 2007 028 932 A1 hervor. In der Druckschrift wird beschrieben, dass die Schaumstoffschicht innerhalb des Fahrzeugluftreifens mit einem vorab aufgebrachten, selbsttätig abdichtenden Dichtmittel haftend an der Innenoberfläche des Fahrzeugluftreifens befestigt wird. Als Dichtmittel kommt hierbei ein Polyurethan-Gel zum Einsatz.

Darüber hinaus ist aus der DE 198 06 953 C2 ein Fahrzeugluftreifen sowie ein Verfahren zur Herstellung eines derartigen Fahrzeugluftreifens bekannt, bei dem die Schaumstoffschicht bereits vor dem Aufbringen auf der inneren Oberfläche des Fahrzeugluftreifens in einer hierfür geeigneten Form durch ein Aufschäumverfahren hergestellt und anschließend auf der dem Innenraum des Fahrzeugluftreifens zugewandten Seite mit einer zusätzlichen, schallabsorbierenden Struktur ausgestattet wird. Die auf die Schaumstoffschicht aufgebrachte Struktur kann dabei eine Linienform oder eine Wellenform aufweisen, die jeweils dazu geeignet sind, eine vergrößerte Oberfläche zu schaffen, die zusätzlich schallabsorbierend wirkt.

Die JP 2005 104 314 A beschreibt einen gattungsgemäßen Fahrzeugluftreifen, der an seiner der Lauffläche gegenüberliegenden Innenoberfläche eine Schaumstoffschicht aufweist, deren Porenanteil zwischen 80 % und 95 % beträgt. Die in den Fahrzeugluftreifen eingebettete Schaumstoffschicht verfügt nach dem Offenbarungsgehalt dieser Schrift zudem über die Fähigkeit, die durch die Reibung zwischen dem Fahrzeugluftreifen und der Straßenoberfläche entstehende Wärme in verbesserter Weise abzuleiten.

Aus der EP 0 364 927 A2 geht ein Fahrzeugluftreifen hervor, bei dem in den Lufthohlraum des Fahrzeugluftreifens kugelförmige Absorptionskörper eingebracht sind. Die Absorptionskörper sind mit Luft befüllt und miteinander verbunden, sodass sie an der Innenoberfläche des Fahrzeugluftreifens haften. Ziel dieser Lösung ist es, die Lauffähigkeit des Fahrzeugluftreifens zu erhalten, auch wenn dieser eine Beschädigung erfahren hat, wie sie beispielsweise durch das Eindringen eines Nagels entstehen kann. Die Absorptionskörper bewirken dabei, dass die Luft nicht explosionsartig aus dem Fahrzeugluftreifen entweicht. Derartige Absorptionskörper wirken auch Schall absorbierend.

Schließlich ist aus der JP 2008 162 496 A ganz allgemein ein Fahrzeugluftreifen bekannt, in dessen Lufthohlraum eine Zellstruktur eingebracht ist, die der Schallabsorption dient. Diese Zellstruktur besteht vorwiegend aus einem Polyurethanschaum und ist stoffschlüssig mit der Innenoberfläche des Fahrzeugluftreifens verbunden.

Wie zuvor bereits ausgeführt wurde, ist mit den bislang bekannten Lösungen bereits eine sehr gute Schallabsorption des vom Fahrzeugluftreifen erzeugten Abrollgeräusches erreichbar. Dennoch besteht das Bedürfnis nach einer weitergehenden Verbesserung.

Der Erfindung liegt daher die Aufgabe zugrunde, einen mit einer innenliegenden Schaumstoffschicht ausgestatteten Fahrzeugluftreifen zu schaffen, dessen akustisches Absorptionsvermögen gegenüber bekannten Lösungen verbessert ist.

Die Erfindung löst diese Aufgabenstellung mit den Merkmalen des Patentanspruches 1. Weitere Ausgestaltungen der Erfindung sind Gegenstand der sich anschließenden Unteransprüche.

Ein Fahrzeugluftreifen mit einer strukturierten Lauffläche, die beidseitig in Seitenwände übergeht, deren Ende durch einen Reifenwulst gebildet wird, der luftdicht in eine Felge eines mit dem Fahrzeugluftreifen ausgestatteten Fahrzeugrades einsetzbar ist, sodass zwischen Felge und Fahrzeugluftreifen ein mit Druckluft befüllter Lufthohlraum ausgebildet wird, wobei der Fahrzeugluftreifen an seiner der Lauffläche gegenüberliegenden Innenoberfläche eine Schaumstoffschicht aufweist, wurde erfindungsgemäß dahingehend weitergebildet, dass der Porenanteil der Schaumstoffschicht zwischen 80 % und 99 % des Gesamtvolumens der Schaumstoffschicht beträgt und dass 40% der in der Schaumstoffschicht vorhandenen Poren eine Größe zwischen 0,3 mm und 0,4 mm aufweisen, 40% der in der Schaumstoffschicht vorhandenen Poren eine Größe zwischen 0,4 mm und 0,5 mm aufweisen, 10% der in der Schaumstoffschicht vorhandenen Poren eine Größe zwischen 0,5 mm und 0,7 mm aufweisen, 8% der in der Schaumstoffschicht vorhandenen Poren eine Größe unterhalb von 0,3 mm aufweisen und 2% der in der Schaumstoffschicht vorhandenen Poren eine Größe oberhalb von 0,7 mm aufweisen.

Damit liegen insgesamt etwa 80 % der Poren in einem Größenbereich zwischen 0,3 und 0,5 mm und sind damit bestimmend für das positive Ergebnis einer erfindungsgemäßen Ausführungsform.

Die Eigenschaften der Schaumstoffschicht werden ausschließlich durch die Prozessführung beim Aufschäumen erreicht, wobei der Schaum aus der flüssigen Phase aufgeschäumt wird. Danach erfolgt praktisch keine weitere Bearbeitung der Schaumstoffschicht mehr.

Die Rohstoffe, die Temperatur, die Gasbildung, die Schäumgeschwindigkeit und äußere Bedingungen, wie der Gegendruck und die verwendete Schäumform, in der das Aufschäumen erfolgt, bilden maßgebliche Rahmenbedingungen für die Qualität des Schaumstoffes. Folglich resultieren hieraus auch die Geometrie (Porengröße und Form sowie Dicke und Steifigkeit der Zellwände) und damit letztlich Eigenschaften wie Gewicht, Schallabsorption, Druckverformung, sowie die Wärmeisolation der Schaumstoffschicht.
Es konnte festgestellt werden, das mit der erfindungsgemäßen Eigenschaft der Schaumstoffschicht, dass der Porenanteil zwischen 70% und 99% des Gesamtvolumens der Schaumstoffschicht beträgt, gegenüber bislang im Einsatz befindlichen Schaumstoffschichten in Fahrzeugluftreifen nochmals wesentlich verbesserte Schallabsorptionseigenschaften erreicht werden können. Diese weitergehende Verbesserung resultiert aus dem relativ hohen Luftanteil in der Schaumstoffschicht. Die diese Luft enthaltenen Poren reflektieren und brechen den Körperschall und damit das Abrollgeräusch des Fahrzeugluftreifens, so dass es zu dem genannten Effekt kommt.

Eine Weiterbildung der Erfindung geht dahin, dass einzelne Poren in der Schaumstoffschicht eine Größe von 1,0 mm bis 1,5 mm aufweisen. Anders ausgedrückt verfügen nur verhältnismäßig wenige Poren über eine derartige Größe, was dazu führt das die Schaumstoffschicht insgesamt eher feinporig ausgeführt ist und einen hohen Luftanteil aufweist. Damit lassen sich die eingangs erwähnten Eigenschaften einer verbesserten Schallabsorption erreichen.

Besonders gute Ergebnisse der Absorption des Abrollgeräusches des Fahrzeugluftreifens sind darüber hinaus erreichbar, wenn die Geometrie der Poren in der Schaumstoffschicht kugelförmig oder polygonal ist. Bei einer polygonalen Geometrie der Poren der Schaumstoffschicht werden insbesondere im Querschnitt sechseckige Geometrien der Poren bevorzugt, wobei jedoch auch im Querschnitt viereckig ausgeführte Poren im Sinne der Erfindung sind. Die sechseckige Geometrie der Poren ergibt sich durch die Anzahl der benachbarten Poren und die Oberflächenspannung der Zellwände sowie durch die Grundsteifigkeit des für die Herstellung der Schaumstoffschicht zum Einsatz kommenden Werkstoffes.

Verbesserungen hinsichtlich der Schallabsorption der Schaumstoffschicht sind darüber hinaus erreichbar, wenn in einer Ebene zwischen 5 und 12 und im Raum bis zu 26 Poren zueinander benachbart angeordnet sind, was eine Auswirkung der Verteilung der Porengröße beziehungsweise ihrer Variation ist. So kann zum Beispiel eine große Pore von mehreren kleineren Poren umgeben sein. Sind alle Poren gleich groß, ist die Zahl der Nachbarporen festgelegt. Bei kubischer Porenform sind es beispielsweise 6 Nachbarn ersten Grades mit einem Flächenkontakt und 20 Nachbarn zweiten Grades mit einem Linienkontakt. Bei kugelförmigen Poren sind im dreidimensionalen Raum je nach Packungsdichte 6 oder 8 Nachbarporen vorhanden.

Weiterhin weist die erfindungsgemäß zum Einsatz kommende Schaumstoffschicht gemäß einer vorteilhaften Ausführung der Erfindung die Eigenschaft auf, dass die Zellwände der Poren in der Schaumstoffschicht stäbchenförmig und mit einer Verzweigungsdichte zwischen 3 und 15, bevorzugt 7 Ästen je Knotenpunkt ausgebildet sind. Folglich können entsprechend diesem Vorschlag die Zellwände spezielle, geometrische Formen haben. Dabei müssen die Poren mit vollkommen regellosen Formen den verbleibenden Raum ausfüllen. Hier lässt sich eine Abhängigkeit zwischen der Steifigkeit, der Oberflächenspannung und der Molekülstruktur der Zellwände mit dem Druck in den Poren erkennen, der beim Schäumen entsteht. Die Anzahl und Anordnung der Äste und Verzweigungspunkte wird durch das Zusammenwirken von Steifigkeit, Oberflächenspannung und Molekülstruktur der Äste mit dem Druck und der Verteilung der Poren beim Schäumen erreicht.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.
Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

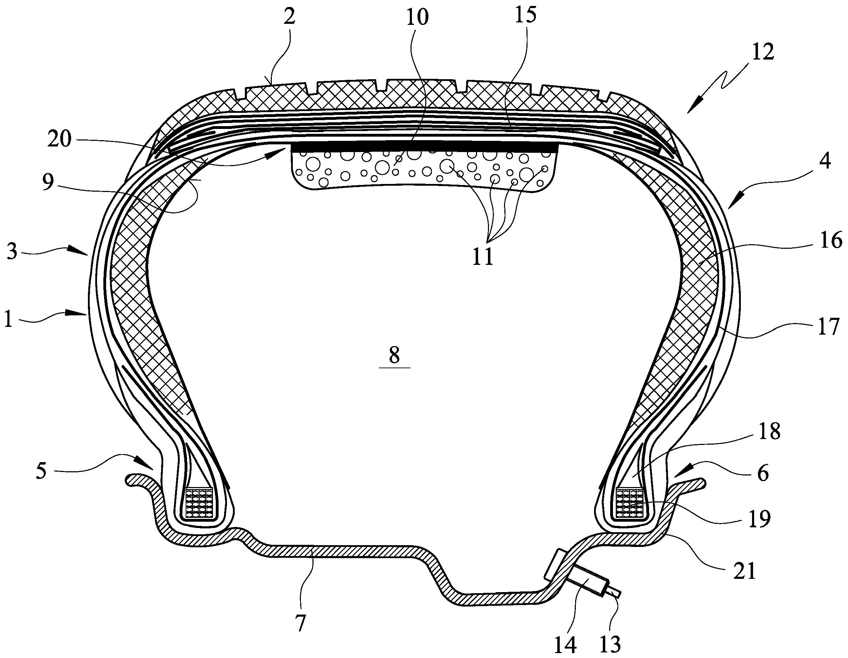

Die Figur zeigt einen Querschnitt durch ein Fahrzeugrad 12. Dieses setzt sich aus einem Fahrzeugluftreifen 1 und einer den Fahrzeugluftreifen 1 aufnehmenden Felge 7 zusammen. Der Fahrzeugluftreifen 1 besteht seinerseits aus einer profilierten Lauffläche 2, deren Profil in der Darstellung in Figur 1 durch mehrere, nutartige Vertiefungen lediglich angedeutet ist. Unterhalb dieser Lauffläche 2 verfügt der Fahrzeugluftreifen 1 über mehrere Gürtellagen 15, die in der Figur 1 ebenfalls nur andeutungsweise dargestellt sind. Beidseitig der Lauffläche 2 geht der Fahrzeugluftreifen 1 ferner in je eine Seitenwand 3 beziehungsweise 4 über, deren unteres Ende jeweils durch einen Reifenwulst 5 beziehungsweise 6 gebildet ist. Jeder Reifenwulst 5, 6 besteht aus einem Wulstkern 19, der in ein Kernprofil 18 übergeht, das mit einem Gummiwerkstoff ummantelt ist. Die Reifenwulste 5, 6 des Fahrzeugluftreifens 1 bilden gegenüber der Umgebung eine Dichtung, so dass diese luftdicht an einem Felgenrand 21 der Felge 7 anliegen. Der Fahrzeugluftreifen 1 und die Felge 7 umgeben dadurch gemeinsam einen Lufthohlraum 8, der über das in einen Ventilschaft 14 eingesetzte Ventil 13 des Fahrzeugrades 12 mit Druckluft befüllt wird. Die Seitenwände 3, 4 des Fahrzeugluftreifens 1 setzen sich in an sich bekannter Weise aus mehreren Lagen zusammen und bilden dadurch ein komplexes System zur Stabilisierung des Fahrzeugluftreifens 1. So ist an der Innenoberfläche einer jeden Seitenwand 3, 4 zunächst ein Verstärkungsprofil 16 vorhanden, an das sich in Richtung Außenseite jeder Seitenwand 3, 4 eine Karkasse 17 anschließt, die ihrerseits in eine in der Figur 1 nicht näher bezeichnete Gummischicht eingebettet ist. Zudem kann die Seitenwand zusätzliche Einzellagen enthalten, auf die hier aber nicht näher eingegangen wird.
Aus der Figur geht insbesondere die erfindungsgemäße Besonderheit hervor, die darin besteht, dass an der der Lauffläche 2 gegenüberliegenden Innenoberfläche 9 des Fahrzeugluftreifens 1 eine Schaumstoffschicht 10 angeordnet ist. Diese Schaumstoffschicht 10 wird unter Verwendung eines Klebstoffes 20 stoffschlüssig mit der Innenoberfläche 9 des Fahrzeugluftreifens 1 verbunden. Wie dies andeutungsweise aus der Darstellung in Figur 1 hervorgeht, ist der Klebstoff 20 vorliegend flächig durchgehend aufgetragen und ist bei dem Beispiel in Umfangsrichtung des Fahrzeugluftreifens 1 auf die Innenoberfläche 9 des Fahrzeugluftreifens 1 aufgebracht. Die Schaumstoffschicht 10 wurde anschließend mit der Innenoberfläche 9 des Fahrzeugluftreifens 1 verbunden. Bei diesem Beispiel ist es von Bedeutung zu erkennen, dass der Porenanteil der Schaumstoffschicht 10 zwischen 80 % und 99 % des Gesamtvolumens der Schaumstoffschicht 10 beträgt. In der Figur ist dies durch die große Anzahl der Poren 11 in der Schaumstoffschicht 10 versinnbildlicht. Darüber hinaus weist die erfindungsgemäße Lösung unterschiedliche Größen der Poren 11 auf. So sind dementsprechend in der Darstellung Poren 11 mit einem größeren und Poren 11 mit einem kleineren Durchmesser angedeutet. Hierbei weist die Schaumstoffschicht 10 die Besonderheit auf, dass 40% der in der Schaumstoffschicht 10 vorhandenen Poren 11 eine Größe zwischen 0,3 mm und 0,4 mm aufweisen, 40% der in der Schaumstoffschicht 10 vorhandenen Poren 11 eine Größe zwischen 0,4 mm und 0,5 mm aufweisen, 10% der in der Schaumstoffschicht 10 vorhandenen Poren 11 eine Größe zwischen 0,5 mm und 0,7 mm aufweisen, 8% der in der Schaumstoffschicht 10 vorhandenen Poren 11 eine Größe unterhalb von 0,3 mm aufweisen und 2% der in der Schaumstoffschicht 10 vorhandenen Poren 11 eine Größe oberhalb von 0,7 mm aufweisen. Die in der Figur gezeigten Poren 11 verfügen hierbei ausnahmslos über eine kugelförmige Geometrie.

### Bezugszeichenliste:

- 1: Fahrzeugluftreifen
- 2: Lauffläche
- 3: Seitenwand
- 4: Seitenwand
- 5: Reifenwulst
- 6: Reifenwulst
- 7: Felge
- 8: Lufthohlraum
- 9: Innenoberfläche
- 10: Schaumstoffschicht
- 11: Pore
- 12: Fahrzeugrad
- 13: Ventil
- 14: Ventilschaft
- 15: Gürtellagen
- 16: Verstärkungsprofil
- 17: Karkasse
- 18: Kernprofil
- 19: Wulstkern
- 20: Klebstoff

## Patentansprüche

1. Fahrzeugluftreifen (1) mit einer strukturierten Lauffläche (2), die beidseitig in Seitenwände (3, 4) übergeht, deren Ende durch einen Reifenwulst (5, 6) gebildet wird, der luftdicht in eine Felge (7) eines mit dem Fahrzeugluftreifen (1) ausgestatteten Fahrzeugrades einsetzbar ist, sodass zwischen Felge (7) und Fahrzeugluftreifen (1) ein mit Druckluft befüllter Lufthohlraum (8) ausgebildet wird, wobei der Fahrzeugluftreifen (1) an seiner der Lauffläche (2) gegenüberliegenden Innenoberfläche (9) eine Schaumstoffschicht (10) aufweist, und der Porenanteil der Schaumstoffschicht (10) zwischen 70% und 99% des Gesamtvolumens der Schaumstoffschicht (10) beträgt, **dadurch gekennzeichnet, dass** 40% der in der Schaumstoffschicht (10) vorhandenen Poren (11) eine Größe zwischen 0,3 mm und 0,4 mm aufweisen, 40% der in der Schaumstoffschicht (10) vorhandenen Poren (11) eine Größe zwischen 0,4 mm und 0,5 mm aufweisen, 10% der in der Schaumstoffschicht (10) vorhandenen Poren (11) eine Größe zwischen 0,5 mm und 0,7 mm aufweisen, 8% der in der Schaumstoffschicht (10) vorhandenen Poren (11) eine Größe unterhalb von 0,3 mm aufweisen und 2% der in der Schaumstoffschicht (10) vorhandenen Poren (11) eine Größe oberhalb von 0,7 mm aufweisen.

2. Fahrzeugluftreifen nach einem der vorstehend genannten Ansprüche,
**dadurch gekennzeichnet, dass**
einzelne Poren (11) in der Schaumstoffschicht (10) eine Größe von 1,0 mm bis 1,5 mm aufweisen.

3. Fahrzeugluftreifen nach einem der vorstehend genannten Ansprüche,
**dadurch gekennzeichnet, dass**
die Geometrie der Poren (11) in der Schaumstoffschicht (10) kugelförmig oder polygonal ist.

4. Fahrzeugluftreifen nach einem der vorstehend genannten Ansprüche,
**dadurch gekennzeichnet, dass**
die Geometrie der Poren (11) in der Schaumstoffschicht (10) im Querschnitt betrachtet viereckig oder sechseckig ist.

5. Fahrzeugluftreifen nach einem der vorstehend genannten Ansprüche,
**dadurch gekennzeichnet, dass**
in einer Ebene zwischen 5 und 12 und im Raum bis zu 26 Poren (11) zueinander benachbart angeordnet sind.

6. Fahrzeugluftreifen nach einem der vorstehend genannten Ansprüche,
**dadurch gekennzeichnet, dass**
die Zellwände der Poren (11) in der Schaumstoffschicht (10) stäbchenförmig und mit einer Verzweigungsdichte zwischen 3 und 15, bevorzugt 7 Ästen je Knotenpunkt ausgebildet sind.

## Claims

1. Pneumatic vehicle tire (1) having a structured tread (2) which transitions at both sides into sidewalls (3, 4), the end of which is formed by a tire bead (5, 6) which is insertable in air-tight fashion into a wheel rim (7) of a vehicle wheel equipped with the pneumatic vehicle tire (1), such that an air cavity (8) filled with compressed air is formed between wheel rim (7) and pneumatic vehicle tire (1), wherein the pneumatic vehicle tire (1) has, on its inner surface (9) situated opposite the tread (2), a foamed material layer (10), and the porosity of the foamed material layer (10) amounts to between 70% and 99% of the total volume of the foamed material layer (10)
**characterized in that**
40% of the pores (11) present in the foamed material layer (10) have a size between 0.3 mm and 0.4 mm, 40% of the pores (11) present in the foamed material layer (10) have a size between 0.4 mm and 0.5 mm, 10% of the pores (11) present in the foamed material layer (10) have a size between 0.5 mm and 0.7 mm, 8% of the pores (11) present in the foamed material layer (10) have a size smaller than 0.3 mm, and 2% of the pores (11) present in the foamed material layer (10) have a size greater than 0.7 mm.

2. Pneumatic vehicle tire according to one of the preceding claims,
**characterized in that**
individual pores (11) in the foamed material layer (10) have a size from 1.0 mm to 1.5 mm.

3. Pneumatic vehicle tire according to one of the preceding claims,
**characterized in that**
the geometry of the pores (11) in the foamed material layer (10) is spherical or polygonal.

4. Pneumatic vehicle tire according to one of the preceding claims,
**characterized in that**
the geometry of the pores (11) in the foamed material layer (10) is tetragonal or hexagonal as viewed in cross section.

5. Pneumatic vehicle tire according to one of the preceding claims,
**characterized in that**,
in a plane, between 5 and 12, and in space, up to 26, pores (11) are arranged adjacent to one another.

6. Pneumatic vehicle tire according to one of the preceding claims,
**characterized in that**
the cell walls of the pores (11) in the foamed material layer (10) are of rod-like form with a branching density of between 3 and 15, preferably 7, branches per junction point.

## Revendications

1. Pneumatique de véhicule (1) avec une bande de roulement structurée (2), qui se prolonge de part et d'autre dans des flancs (3, 4), dont les extrémités sont formées par un talon de pneu (5, 6), qui peut être inséré hermétiquement dans une jante (7) d'une roue de véhicule équipée du pneumatique de véhicule (1), de telle manière qu'une chambre à air (8) remplie d'air comprimé soit formée entre la jante (7) et le pneumatique de véhicule (1), dans lequel le pneumatique de véhicule (1) présente une couche de mousse (10) sur sa face intérieure (9) opposée à la bande de roulement (2), et la proportion de pores de la couche de mousse (10) vaut entre 70 % et 99 % du volume total de la couche de mousse (10), **caractérisé en ce que** 40 % des pores (11) présents dans la couche de mousse (10) présentent une taille comprise entre 0,3 mm et 0,7 mm, 40 % des pores (11) présents dans la couche de mousse (10) présentent une taille comprise entre 0,4 mm et 0,5 mm, 10 % des pores (11) présents dans la couche de mousse (10) présentent une taille comprise entre 0,5 mm et 0,7 mm, 8 % des pores (11) présents dans la couche de mousse (10) présentent une taille inférieure à 0,3 mm et 2 % des pores (11) présents dans la couche de mousse (10) présentent une taille supérieure à 0,7 mm.

2. Pneumatique de véhicule selon l'une quelconque des revendications précédentes, **caractérisé en ce que** des pores isolés (11) dans la couche de mousse (10) présentent une taille de 1,0 mm à 1,5 mm.

3. Pneumatique de véhicule selon l'une quelconque des revendications précédentes, **caractérisé en ce que** la géométrie des pores (11) dans la couche de mousse (10) est de forme sphérique ou polygonale.

4. Pneumatique de véhicule selon l'une quelconque des revendications précédentes, **caractérisé en ce que** la géométrie des pores (11) dans la couche de mousse (10), considérés en section transversale, est quadrangulaire ou hexagonale.

5. Pneumatique de véhicule selon l'une quelconque des revendications précédentes, **caractérisé en ce que** dans un plan entre 5 et 12 pores et dans l'espace jusqu'à 26 pores sont disposés à proximité les uns des autres.

6. Pneumatique de véhicule selon l'une quelconque des revendications précédentes, **caractérisé en ce que** les parois de cellule des pores (11) dans la couche de mousse (10) sont en forme de bâtonnets et sont réalisées avec une densité de ramification comprise entre 3 et 15, de préférence 7, branches par noeud.
